(19) Europäisches Patentamt
European Patent Office
Office européen des brevets

(11) **EP 3 282 407 A1**

(12) **EUROPEAN PATENT APPLICATION**

(43) Date of publication:
**14.02.2018 Bulletin 2018/07**

(51) Int Cl.:
***G06Q 10/06*** (2012.01)

(21) Application number: **17178893.8**

(22) Date of filing: **29.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.08.2016 JP 2016159014**

(71) Applicant: **Fujitsu Limited**
**Kawasaki-shi, Kanagawa 211-8588 (JP)**

(72) Inventors:
• **MURAKAMI, Ryo**
**Kawasaki-shi,, Kanagawa 211-8588 (JP)**
• **KOBAYASHI, Sachio**
**Kawasaki-shi,, Kanagawa 211-8588 (JP)**

(74) Representative: **Haseltine Lake LLP**
**Lincoln House, 5th Floor**
**300 High Holborn**
**London WC1V 7JH (GB)**

(54) **ASSEMBLY LINE BALANCING APPARATUS, METHOD AND PROGRAM**

(57) A line balancing apparatus includes: an input unit (11) that receives input of positioning details of a person and a robot positioned in processes in an assembly line, jobs representing targets for assignment to the processes, a line balancing condition including takt time for the assembly line, and job information containing possibility of automation and job time of each of the jobs; a calculating unit(12) that, based on the line balancing condition and the job information, calculates an evaluation value which, in case in which the jobs are assigned to a person and a robot positioned in the processes, indicates difference between cycle time in a process in which a person is positioned and the takt time; a searching unit(13) that solves optimization problem on condition of minimizing the calculated evaluation value and searches for line balancing of a combination of assignment of the jobs to the processes; and an output unit(14) that outputs the line balancing which has been retrieved.

FIG.1

EP 3 282 407 A1

## Description

FIELD

The embodiment discussed herein is related to a line balancing apparatus, a line balancing method, and a line balancing program.

BACKGROUND

Typically, line balancing, which is meant for assigning jobs to the processes in an assembly line for assembling a product, is optimized by taking into account the compliance to the job sequence in the processes and the equalization of the quantity of work.

As a conventional technology of line balancing, a method is known in which the most suitable product assembling sequence is decided by taking into account the workability of the product assembling activity; and the most suitable assembly job distribution is created as the assembly line job plan by taking into account various constraint conditions with respect to the decided product assembling sequence. Moreover, for each job, the time and the cost is obtained when the job is performed by a person and when the job is performed by a robot. Furthermore, a method is known for finding such assignment in which the total job time (cycle time) of the persons and the robots remains within the time limit (takt time) set according to the production schedule and the total cost is the smallest.

[Patent Literature 1] Japanese Laid-open Patent Publication No. 6-52178
[Non-patent Literature 1] B. Rekiek et al., "A multiple objective grouping genetic algorithm for assembly line design," J. Intell. Manuf., 12, 467 (2001).

However, in the conventional technology, the cost of using a robot is treated as the fixed cost in the same manner as in the case of the cost of a person. That is, the running cost of a robot is not taken into account. For example, the use of persons involves a fixed labor cost depending on the number of persons. However, the use of a robot involves the running cost that varies according to the quantity of jobs and the operation time. For that reason, in the line balancing in which the operation time of a robot is extended due to the jobs assigned thereto, there are times when the actual total cost of the assembly line increases.

Accordingly, it is an object in one aspect of an embodiment of the invention to provide a line balancing apparatus, a line balancing method, and a line balancing program that enable generation of such line balancing by which the total cost of an assembly line is further reduced.

SUMMARY

According to an aspect of an embodiment, a line balancing apparatus includes: an input unit that receives input of positioning details of a person and a robot positioned in processes in an assembly line, jobs representing targets for assignment to the processes, a line balancing condition including takt time for the assembly line, and job information containing possibility of automation and job time of each of the jobs; a calculating unit that, based on the line balancing condition and the job information, calculates an evaluation value which, in case in which the jobs are assigned to a person and a robot positioned in the processes, indicates difference between cycle time in a process in which a person is positioned and the takt time; a searching unit that solves optimization problem on condition of minimizing the calculated evaluation value and searches for line balancing of a combination of assignment of the jobs to the processes; and an output unit that outputs the line balancing which has been retrieved.

BRIEF DESCRIPTION OF DRAWINGS

FIG. 1 is a block diagram illustrating an exemplary functional configuration of a line balancing apparatus according to an embodiment;
FIG. 2 is an explanatory diagram for explaining an assembly line;
FIG. 3 is an explanatory diagram for explaining the cycle time and the takt time in the assembly line;
FIG. 4 is an explanatory diagram for explaining the sequence of jobs in the assembly line;
FIG. 5 is a flowchart for explaining an example of the operations performed in the line balancing apparatus according to the embodiment; and
FIG. 6 is a block diagram illustrating an exemplary hardware configuration of the line balancing apparatus according to the embodiment.

DESCRIPTION OF EMBODIMENT

Preferred embodiments of the present invention will be explained with reference to accompanying drawings. In the embodiment, the configurations having identical functions are referred to by the same reference numbers, and their explanation is not repeated. Moreover, the line balancing apparatus, the line balancing method, and the line balancing program described below in the embodiment are only exemplary, and are not limited to the embodiment described below. Moreover, the embodiments can be appropriately combined without causing any contradiction.

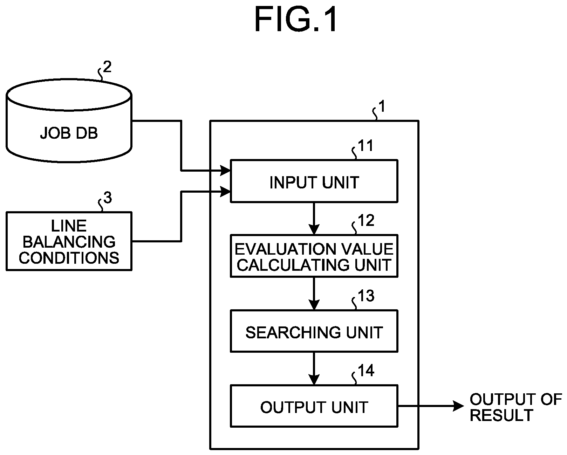

FIG. 1 is a block diagram illustrating an exemplary functional configuration of a line balancing apparatus according to the embodiment. As illustrated in FIG. 1, a line balancing apparatus 1 is an information processing apparatus such as a personal computer (PC) and includes an input unit 11, an evaluation value calculating unit 12, a searching unit 13, and an output unit 14.

Based on input data such as a job database (DB) 2 and line balancing conditions 3, the line balancing apparatus 1 performs line balancing in which product assembly jobs (hereinafter, called jobs) are assigned to the processes in an assembly line for assembling a product; and outputs the result of line balancing.

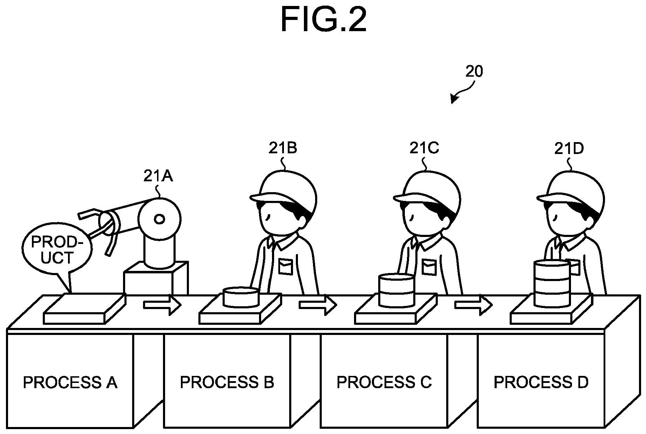

FIG. 2 is an explanatory diagram for explaining an assembly line. As illustrated in FIG. 2, as an example in the embodiment, an assembly line 20 for assembling a product includes four processes, namely, a process A to a process D.

In the assembly line 20, depending on the takt time (time limit) set according to the production schedule, a product is conveyed to the subsequent processes using a belt conveyer (not illustrated). In the processes in the assembly line 20, a robot 21A and workers 21B to 21D are positioned. In the example illustrated in FIG. 2, the robot 21A is positioned in the process A, and the workers 21B to 21D are positioned in the processes B to D, respectively.

To the processes A to D of the assembly line 20, according to the line balancing performed by the line balancing apparatus 1, jobs are assigned in such a way that the total job time (cycle time) in the processes remains within the takt time. The robot 21A and the workers 21B to 21D that are positioned in various processes perform jobs, which are assigned thereto as a result of line balancing, with respect to the products conveyed in the assembly line 20, and manufacture a product.

Meanwhile, the configuration example of the assembly line 20 is not limited to the configuration illustrated in FIG. 2. For example, the assembly line 20 can include more than four processes. Moreover, the robot 21A can be positioned in a different process other than the process A. Furthermore, there can be a plurality of robots 21A.

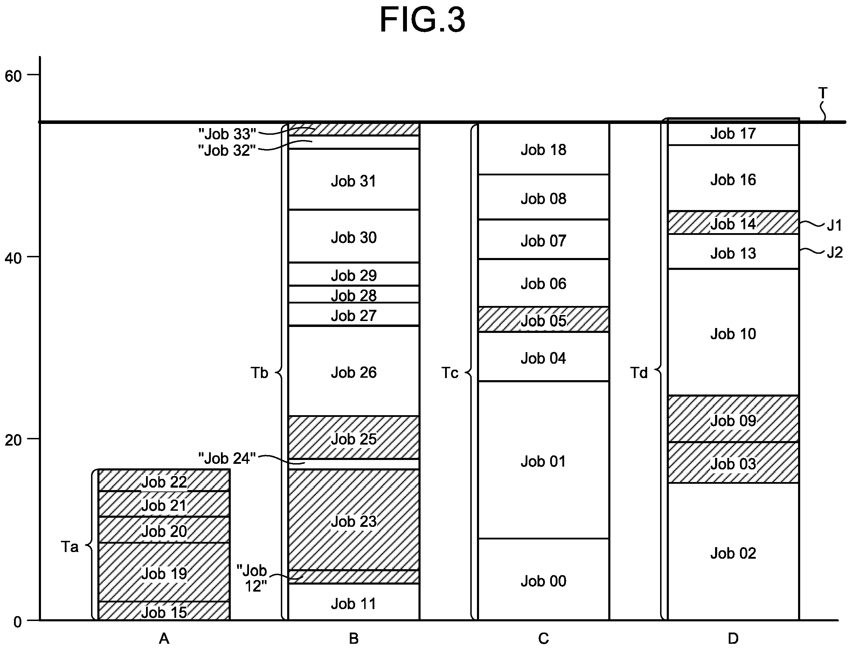

FIG. 3 is an explanatory diagram for explaining the cycle time and the takt time in the assembly line 20. As illustrated in FIG. 3, as a result of the line balancing performed by the line balancing apparatus 1, jobs J1 and J2 are assigned to the processes A to D in such a way that cycles time Ta to cycle time Td representing the total job time just about falls within a takt time T.

The jobs J1 represent automatable jobs and thus can be assigned to the robot 21A. The jobs J2 represent non-automatable jobs that cannot be assigned to the robot 21A. Based on information (such as a flag) indicating whether or not each job is automatable, the line balancing apparatus 1 assigns the automatable jobs J1 to the process A in which the robot 21A is positioned.

Moreover, the line balancing apparatus 1 solves the combinational optimization problem on the condition of minimizing the difference of the cycle times Tb to Td of the workers 21B to 21D, who are respectively positioned in the processes B to D, with the takt time T; and obtains a combination of assignment of the jobs J1 and J2 to the processes. Then, the line balancing apparatus 1 outputs the obtained combination as the result of line balancing. In this way, by obtaining a combination in which the jobs J1 and J2 are assigned to the workers 21B to 21D to the extent possible, the line balancing apparatus 1 performs such line balancing by which the operation time (cycle time Ta) of the robot 21A can be held down and thus the running cost of the robot 21A can be reduced.

Returning to the explanation with reference to FIG. 1, the input unit 11 receives input of the line balancing conditions 3 as a result of operation input performed by the user. Moreover, the input unit 11 refers to the job DB 2 that is used to store a variety of information regarding the jobs J1 and J2 to be assigned during line balancing. As a result of referring to the job DB 2, the input unit 11 receives input of job information containing the possibility of automation, the job time, and the degree of difficulty of each of the jobs J1 and J2.

The line balancing conditions 3 represent various conditions for performing line balancing and are set by the user by performing operation input via a graphical user interface (GUI). For example, the line balancing conditions 3 include the takt time T set for the assembly line 20. Moreover, the line balancing conditions 3 include the positioning details of the workers 21B to 21D and the robot 21A that are to be positioned in the processes (A to D) of the assembly line 20.

Furthermore, the line balancing conditions 3 include the jobs J1 and J2 that are to be assigned to the processes (A to D) of the assembly line 20. More particularly, the line balancing conditions 3 include identification information (for example, "(Job)+(identification number)") enabling identification of the jobs J1 and J2 that are to be assigned.

Moreover, the line balancing conditions 3 include a weight that is to be multiplied with an evaluation value at the time of obtaining a combination of assignment of the jobs J1 and J2 to the processes. Furthermore, the line balancing conditions 3 include an algorithm (such as the first fit method or the strongest fit method) that is to be applied for the initial assignment of the jobs J1 and J2 to the processes. Moreover, the line balancing conditions 3 include a search algorithm (such as the hill climbing method, the taboo search, or the annealing search) to be applied at the time of obtaining a combination of assignment of the jobs J1 and J2 to the processes. Furthermore, the line balancing conditions 3 include a termination condition (such as an acceptable penalty value or the maximum search period) to be applied at the time of searching for a combination of assignment of the jobs J1 and J2 to the processes.

Moreover, the line balancing conditions 3 include a sequence constraint (also called a precedence constraint) indicating a constraint condition regarding the sequence of the jobs J1 and J2 until products are assembled into a finished product. More particularly, the sequence constraint represents information in which the jobs J1 and J2 are treated as nodes and by which the sequence relationship among the nodes up to the finished product can be expressed as a directed acyclic graph. Herein, the sequence constraint is set using the GUI.

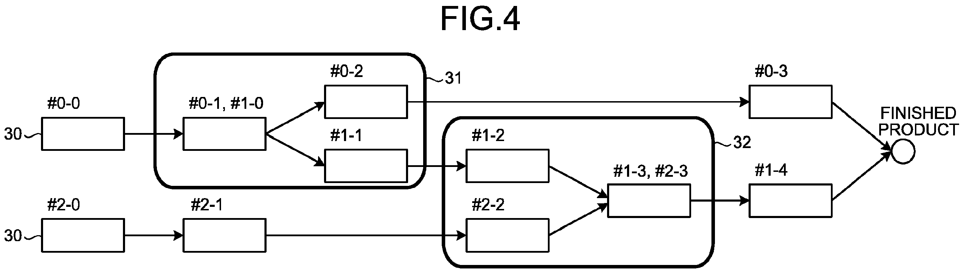

FIG. 4 is an explanatory diagram for explaining the sequence of jobs in the assembly line 20. In FIG. 4, nodes 30 represent the jobs J1 and J2. Moreover, when there is a precedence relation between two nodes 30, an arrow is drawn from the job J1 or the job J2 that is the preceding job (parent node) to the job J1 or the job J2 that is the following job (child node). As illustrated in FIG. 4, the sequence relationship among the nodes 30 up to the finished product is expressed as a directed acyclic graph.

In order to express the sequence relationship, based on the sequence constraint, a number made of "#[family number]-[generation number]" is assigned to the jobs J1 and J2 (the nodes 30) by the input unit 11. More particularly, when a parent node has a number (#i-j) assigned thereto, a number #i-(j+1) is assigned to the child node by the input unit 11.

Moreover, in a branching portion 31 in which a plurality of child nodes is present; the input unit 11 obtains, for the second child node onward, a new family number k in place of the family number i, and newly assigns #k-0 to the parent node and newly assigns #k-1 to the corresponding child node.

Furthermore, in a merging portion 32 in which a plurality of parent nodes is present, although the child node gets assigned with a plurality of numbers from the parent nodes, there is no need to carry over all those numbers to the subsequent child node. Regarding the child node present subsequent to the merging portion 32, the input unit 11 assigns the lowest of the family numbers (i.e., the oldest family number in the assignment sequence).

In the line balancing apparatus 1, using the numbers assigned to the jobs J1 and J2 (the nodes 30), a condition "impose a penalty if the earlier generation (parent) is assigned to a process after the next generation (child) within the same family" is set, so that it becomes possible to evaluate whether or not the precedence constraint is violated.

The evaluation value calculating unit 12 calculates, based on the line balancing conditions 3 and the job information stored in the job DB 2, an evaluation value to be used at the time of solving the combinational optimization problem for obtaining a combination of assignment of the jobs J1 and J2 to the processes. More particularly, the evaluation value calculating unit 12 calculates an evaluation value indicating the difference of the cycle times (Tb to Td) of the processes (B to D), in which the workers (21B to 21D) are positioned, with the takt time T.

Moreover, using the numbers assigned to the jobs J1 and J2 (the nodes 30), the evaluation value calculating unit 12 calculates an evaluation value (a penalty value) to be used in evaluating whether or not the precedence constraint is violated. Furthermore, based on the information about the degrees of difficulty specified in the job information, the evaluation value calculating unit 12 calculates the degrees of difficulty in executing the jobs J1 by the robot 21A in the case in which the jobs J1 are assigned to the robot 21A. More particularly, the evaluation value calculating unit 12 obtains the sum total of the degrees of difficulty of the jobs J1 assigned to the robot 21A.

The searching unit 13 solves the optimization problem on the condition of minimizing the evaluation value calculated by the evaluation value calculating unit 12, and searches for the line balancing of a combination for assignment of the jobs J1 and J2 to the processes (A to D). The output unit 14 outputs the line balancing, which is retrieved by the searching unit 13, in the form of a file output or a display output on a display.

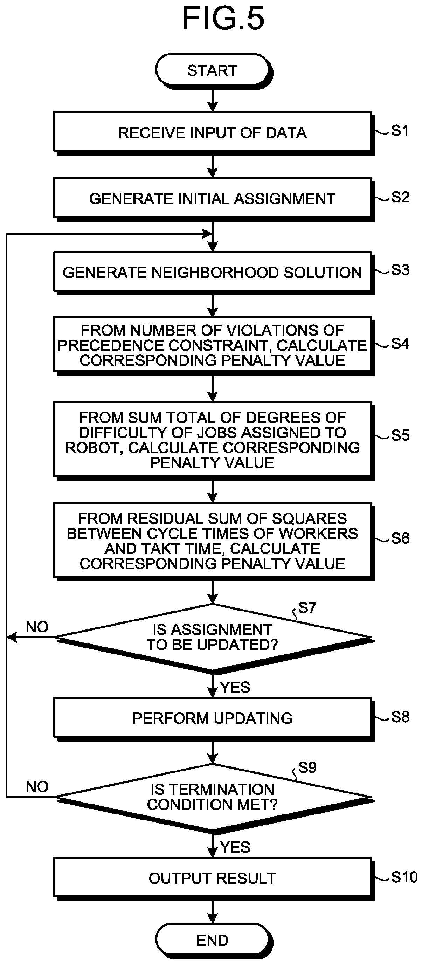

FIG. 5 is a flowchart for explaining an example of the operations performed in the line balancing apparatus 1 according to the embodiment. As illustrated in FIG. 5, when the operations are initiated, the input unit 11 receives input of the data such as the line balancing conditions 3 and the job information (S1).

Then, the evaluation value calculating unit 12 generates initial assignment of the jobs J1 and J2 to the processes as specified in the line balancing conditions 3 (S2). More particularly, based on the algorithm for initial assignment included in the line balancing conditions 3, the evaluation value calculating unit 12 generates the initial assignment using a heuristic method such as the first fit method or the strongest fit method.

Subsequently, the evaluation value calculating unit 12 generates a neighborhood solution from the assignment of the jobs J1 and J2 to the processes (S3). More particularly, the evaluation value calculating unit 12 generates a neighborhood solution by reshuffling two jobs or shifting of one job among the assigned jobs J1 and J2.

Then, the evaluation value calculating unit 12 calculates evaluation values to be used at the time of solving the combinational optimization problem (S4 to S6). More particularly, according to the number of violations of the precedence constraint (for example, "impose a penalty if the earlier generation (parent) is assigned to a process after the next generation (child) of the same family"), the evaluation value calculating unit 12 calculates a penalty value corresponding to the number of violations (S4).

Subsequently, from the sum total of the degrees of difficulty of the jobs J1 assigned to the robot 21A, the evaluation value calculating unit 12 calculates the penalty value corresponding to the execution of the jobs J1 by the robot 21A (S5). Herein, higher the degrees of difficulty of the jobs J1 assigned to the robot 21A, the more it becomes to install a sophisticated robot 21A, thereby resulting in an increase in the initial cost of the robot 21A. Hence, the penalty value calculated at S5 is a value related to the initial cost of the robot 21A, and minimizing the penalty value enables holding down the initial cost of the robot 21A.

Subsequently, based on the jobs J1 and J2 assigned to the workers (21B to 21D) and based on the job time specified in the job information, the evaluation value calculating unit 12 obtains the total job time (the cycle times Tb to Td) taken for executing the jobs J1 and J2 assigned to the workers. Then, the evaluation value calculating unit 12 calculates an evaluation value (a penalty value) from the residual sum of squares (the L2 norm) between the cycle times Tb to Td of the workers (21B to 21D) and the takt time T (S6).

In the embodiment, although the L2 norm is used as the evaluation value between the cycle times Tb to Td of the workers (21B to 27D) and the takt time T, there is no particular restriction on the evaluation value. That is, the L1 norm (i.e., the summation of the absolute values of the differences of the cyclic times Tb to Td with the takt time T) can be alternatively used as the evaluation value.

Subsequently, based on the evaluation value (penalty value) calculated by the evaluation value calculating unit 12; the searching unit 13 determines, according to the search algorithm included in the line balancing conditions 3, whether or not to adopt the neighborhood solution, that is, whether or not to update the assignment of the jobs J1 and J2 (S7).

For example, the searching unit 13 adopts the neighborhood solution when the penalty value improves (becomes smaller). Herein, the rule for adoption differs according to the search algorithm such as the hill climbing method, the taboo search, or the annealing search. For example, there are times when the neighborhood solution is adopted even if the penalty value grows worse (becomes larger).

Meanwhile, in the case of obtaining a plurality of penalty values as optimization conditions in the optimization problem as explained at S4 to S6, the following methods are implemented for dealing with the overall penalty value.

As one method for dealing with the penalty values, a weight ($w_i$) is introduced, and an overall penalty value (P) is calculated using the weighted sum of each penalty value (Pi) as given below in Equation (1). Herein, it is assumed that the weight ($w_i$) is included in the line balancing conditions 3 and is set in advance by the user.

$$P \equiv \sum_i w_i P_i \qquad\qquad (1)$$

As another method for dealing with the penalty values, the penalty (Pi) can be improved in order from the conditions having higher priority. For example, since the line balancing of a combination satisfying the sequence constraint is given priority, the penalty value that corresponds to the number of violations of the precedence constraint as obtained at S4 is obtained from the combination (the neighborhood solution) to be improved. That can be followed by obtaining the combination for improving the penalty value obtained at S5 or S6.

As still another method for dealing with the penalty values, the two methods explained above can be combined. The manner of combining the two methods can be specified by the user in the line balancing conditions 3.

If the assignment of the jobs J1 and J2 is not to be updated (NO at S7), then the system control returns to S3 so that the searching unit 13 can generate a new neighborhood solution. In the case of performing the search at S3 using a new neighborhood solution, the searching unit 13 can perform a combination search either by changing the positioning of the robot 21A that is positioned in the processes in the assembly line 20 or by switching from the robot 21A to a person (worker). In that case, the assignment of the jobs J1 and J2 can be obtained for a wider range of conditions.

Meanwhile, if the assignment of the jobs J1 and J2 is to be updated (YES at S7), then the searching unit 13 updates the assignment of the jobs J1 and J2, as obtained till the previous operation, with the assignment using the neighborhood solution (S8).

In this way, the searching unit 13 solves the combinational optimization problem on the condition of minimizing the difference of the cycle times Tb to Td of the workers 21B to 21D, who are respectively positioned in the processes B to D, with the takt time T; and searches for a combination of assignment of the jobs J1 and J2 to the processes. Moreover, based on the penalty value corresponding to the number of violations of the precedence constraint; the searching unit 13 searches for the line balancing of such a combination, from among the combinations of assignment of the jobs J1 and J2 to the processes, which satisfies the sequence constraint. Furthermore, the searching unit 13 searches for a combination that enables achieving a decrease in the summation of the degrees of difficulty of the jobs J1 assigned to the robot 21A.

Subsequently, the searching unit 13 determines whether or not a termination condition for searching (such as the acceptable penalty value or the maximum search period) as included in the line balancing conditions 3 has been met (S9).

For example, when the penalty values calculated at S4 to S6 satisfy the acceptable penalty value, the searching unit 13 determines that the termination condition is met (YES at S9). Moreover, if the processing time taken for searching for a combination at S3 to S8 exceeds the maximum search period, then the searching unit 13 determines that the search has been performed to a satisfactory extent and the termination condition has been met (YES at S9).

If it is determined that the termination condition is met (YES at S9), then the output unit 14 outputs the result of assignment of the jobs J1 and J2 (the result of line balancing) obtained at S3 to S8 (S10). However, if I is determined that the termination condition is not met (NO at S9), then the system control returns to S3 and the searching unit 13 continues with the search.

As described above, the line balancing apparatus 1 includes the input unit 11, the evaluation value calculating unit 12, the searching unit 13, and the output unit 14. The input unit 11 receives input of the line balancing conditions 3 that include the positioning details of the workers 21B to 21D and the robot 21A to be positioned in the processes in the assembly line 20; include the jobs J1 and J2 to be assigned to the processes; and include the takt time T. Moreover, the input unit 11 receives input of, from the job DB 2, the job information containing the possibility of automation and the job time of each of the jobs J1 and J2. Based on the organizing conditions 3 and the job information, the evaluation value calculating unit 12 calculates, when the jobs J1 and J2 are assigned to the workers 21B to 21D and the robot 21A positioned in the processes, an evaluation value indicating the difference of the cycle times Tb to Td in the processes B to D, in which the workers 21B to 21D are respectively positioned, with the takt time T. The searching unit 13 solves the optimization problem on the condition of minimizing the evaluation value calculated by the evaluation value calculating unit 12; and searches for the line balancing of a combination of assignment of the jobs J1 and J2 to the processes. The output unit 14 outputs the line balancing retrieved by the searching unit 13.

As a result, in the line balancing apparatus 1, it becomes possible to generate such line balancing by which the difference of the cycle times Tb to Td in the processes B to D, in which the workers 21B to 21D are respectively positioned, with the takt time T is the smallest; and it becomes possible to hold down the cycle time Ta (the operation time) in the process A in which the robot 21A is positioned. The use of the robot 21A involves the running cost corresponding to the operation time thereof, and the use of the workers 21B to 21D involves the labor cost (fixed cost) according to the number of persons. Thus, as a result of holding down the cycle time Ta in the process A in which the robot 21A is positioned, it becomes possible to generate such line balancing by which the total cost of the assembly line 20 is further reduced.

Moreover, based on the penalty value corresponding to the number of violations of the precedence constraint, the searching unit 13 searches for the line balancing of such a combination which satisfies the sequence constraint. As a result, it becomes possible to generate the line balancing in accordance with the sequence of jobs during the assembly of a product.

Furthermore, the searching unit 13 searches for such a combination which enables achieving further reduction in the summation of the degrees of difficulty of the jobs J1 assigned to the robot 21A. As a result, it becomes possible to generate such line balancing by which the initial cost of the robot 21A is held down.

Meanwhile, the constituent elements of the apparatus illustrated in the drawings are merely conceptual, and need not be physically configured as illustrated. The constituent elements, as a whole or in part, can be separated or integrated either functionally or physically based on various types of loads or use conditions.

Moreover, regarding the various processing functions implemented in the line balancing apparatus 1, some or all of those functions can be implemented in a central processing unit (CPU) (or a micro controller unit (MCU)). Alternatively, it goes without saying that some or all of the various processing functions can be implemented using computer programs executed in a CPU (or a microcomputer such as a microprocessor unit (MPU) or an MCU) or can be implemented using hardware based on wired logic. Still alternatively, the various processing functions implemented in the line balancing apparatus 1 can be implemented by a plurality of computers in cooperation using cloud computing.

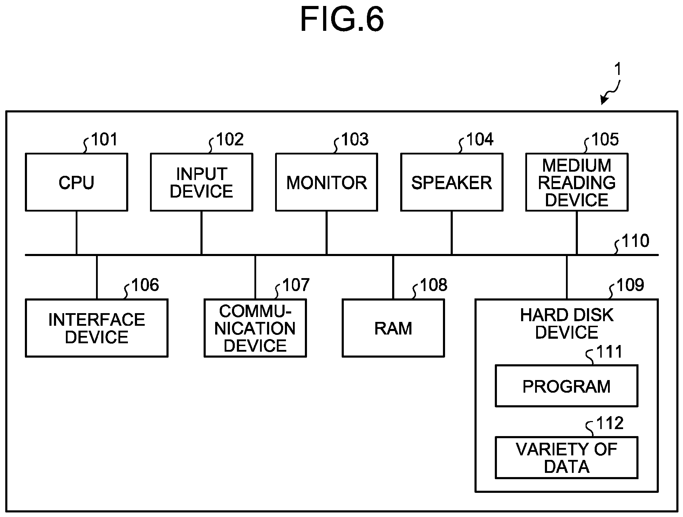

Meanwhile, the various operations explained above in the embodiment can be implemented by executing a computer program, which is written in advance, in a computer. Given below is the explanation of a computer (hardware) that executes the computer program having identical functions to the functions according to the embodiment. FIG. 6 is a block diagram illustrating an exemplary hardware configuration of the line balancing apparatus 1 according to the embodiment.

As illustrated in FIG. 6, the line balancing apparatus 1 includes a CPU 101 that performs a variety of arithmetic processing; an input device 102 that receives input of data; a monitor 103; and a speaker 104. Moreover, the line balancing apparatus 1 includes a medium reading device 105 that reads computer programs from a memory medium; an interface device 106 that establishes connection with various devices; and a communication device 107 that establishes connection and performs communication with external devices in a wired manner or a wireless manner. Furthermore, the line balancing apparatus 1 includes a random access memory (RAM) 108 that is used to temporarily store a variety of information; and a hard disk device 109. Herein, the constituent elements (101 to 109) of the line balancing apparatus 1 are connected to a bus 110.

The hard disk device 109 is used to store a computer program 111 that is meant for performing various operations of the input unit 11, the evaluation value calculating unit 12, the searching unit 13, and the output unit 14 as explained above in the embodiment. Moreover, the hard disk device 109 is used to store a variety of data 112 (such as the job DB 2) that is referred to by the computer program 111. The input device 102 receives input of, for example, operation information from the operator of the line balancing apparatus 1. The monitor 103 displays, for example, various screens for the operator to perform operations. The interface device 106 is connected to a printing device, for example. The communication device 107 is connected to a communication network such as a local area network (LAN), and performs communication of a variety of information with external devices via the communication network.

The CPU 101 performs various operations by reading the computer program 111 from the hard disk device 109, loading it in the RAM 108, and executing it. Meanwhile, the computer program 111 need not be stored in the hard disk device 109. Alternatively, for example, the computer program 111 stored in a readable memory medium, which is readable by the line balancing apparatus 1, can be read and executed. Examples of the readable memory medium, which is readable by the line balancing apparatus 1, include a portable recording medium such as a compact disk read only memory (CD-ROM), a digital versatile disc (DVD), or a USB memory (USB stands for Universal Serial Bus); a semiconductor memory such as a flash memory; and a hard disk drive. Still alternatively, the computer program 111 can be stored in a apparatus connected to a public line, the Internet, or a local area network (LAN); and the line balancing apparatus 1 can read the computer program 111 from that device and execute it.

According to an aspect of the invention, it becomes possible to generate such line balancing by which the total cost of an assembly line is further reduced.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A line balancing apparatus comprising:

   an input unit(11) that receives input of

      positioning details of a person and a robot positioned in processes in an assembly line,
      jobs representing targets for assignment to the processes,
      a line balancing condition including takt time for the assembly line, and
      job information containing possibility of automation and job time of each of the jobs;

   a calculating unit(12) that, based on the line balancing condition and the job information, calculates an evaluation value which, in case in which the jobs are assigned to a person and a robot positioned in the processes, indicates difference between cycle time in a process in which a person is positioned and the takt time;
   a searching unit(13) that solves optimization problem on condition of minimizing the calculated evaluation value and searches for line balancing of a combination of assignment of the jobs to the processes; and
   an output unit(14) that outputs the line balancing which has been retrieved.

2. The line balancing apparatus according to claim 1,
   wherein
   the line balancing condition further includes a sequence constraint indicating a constraint condition regarding sequence of the jobs, and
   the searching unit searches, from among combinations of assignment of the jobs to the processes, a combination satisfying the sequence constraint.

3. The line balancing apparatus according to claim 2, wherein

the sequence constraint includes

a generation number assigned in a corresponding manner to sequence of the jobs, and
a family number regarding which, corresponding to branching of the jobs, a number is newly assigned and, corresponding to merging of the branching, number being oldest in assignment sequence is carried over, and

the searching unit searches, from among combinations of assignment of the jobs to the processes, a combination matching with sequence of the generation number and the family number in the sequence constraint.

4.  The line balancing apparatus according to any one of claims 1 to 3, wherein the searching unit searches for the line balancing in a range in which the cycle time is within the takt time, and when there is no line balancing in a range in which the cycle time is within the takt time, searches for the line balancing either by changing positioning of a robot positioned in a process of the assembly line or by switching from the robot to a person.

5.  The line balancing apparatus according to any one of claims 1 to 4, wherein
the calculating unit further calculates, in case in which the jobs are assigned to a robot positioned in the processes, degree of difficulty in execution of the jobs by the robot, and
the searching unit further solves optimization problem on condition of minimizing the calculated degree of difficulty and searches for the line balancing.

6.  A line balancing method comprising:

receiving input of

positioning details of a person and a robot positioned in processes in an assembly line,
jobs representing targets for assignment to the processes,
a line balancing condition including takt time for the assembly line, and
job information containing possibility of automation and job time of each of the jobs;

calculating, based on the line balancing condition and the job information, an evaluation value which, in case in which the jobs are assigned to a person and a robot positioned in the processes, indicates difference between cycle time in a process in which a person is positioned and the takt time;
searching that includes solving optimization problem on condition of minimizing the calculated evaluation value and searching for line balancing of a combination of assignment of the jobs to the processes; and
outputting the line balancing which has been retrieved.

7.  The line balancing method according to claim 6, wherein
the line balancing condition further includes a sequence constraint indicating a constraint condition regarding sequence of the jobs, and
the searching searches from among combinations of assignment of the jobs to the processes, a combination satisfying the sequence constraint.

8.  The line balancing method according to claim 7, wherein
the sequence constraint includes

a generation number assigned in a corresponding manner to sequence of the jobs, and
a family number regarding which, corresponding to branching of the jobs, a number is newly assigned and, corresponding to merging of the branching, number being oldest in assignment sequence is carried over, and

the searching searches from among combinations of assignment of the jobs to the processes, a combination matching with sequence of the generation number and the family number in the sequence constraint.

9.  The line balancing method according to any one of claims 6 to 8, wherein the searching searches for the line balancing in a range in which the cycle time is within the takt time, and
when there is no line balancing in a range in which the cycle time is within the takt time, the searching searches for the line balancing either by changing positioning of a robot positioned in a process of the assembly line or by switching from the robot to a person.

**10.** The line balancing method according to any one of claims 6 to 9, wherein
the calculating further calculates, in case in which the jobs are assigned to a robot positioned in the processes, degree of difficulty in execution of the jobs by the robot, and
the solving further solves optimization problem on condition of minimizing the calculated degree of difficulty and the searching searches for the line balancing.

**11.** A line balancing program causing a computer to execute:

receiving input of

positioning details of a person and a robot positioned in processes in an assembly line,
jobs representing targets for assignment to the processes,
a line balancing condition including takt time for the assembly line, and
job information containing possibility of automation and job time of each of the jobs;

calculating, based on the line balancing condition and the job information, an evaluation value which, in case in which the jobs are assigned to a person and a robot positioned in the processes, indicates difference between cycle time in a process in which a person is positioned and the takt time;
searching that includes solving optimization problem on condition of minimizing the calculated evaluation value and searching for line balancing of a combination of assignment of the jobs to the processes; and
outputting the line balancing which has been retrieved.

**12.** The line balancing program according to claim 11, wherein
the line balancing condition further includes a sequence constraint indicating a constraint condition regarding sequence of the jobs, and
the searching searches from among combinations of assignment of the jobs to the processes, a combination satisfying the sequence constraint.

**13.** The line balancing program according to claim 12, wherein
the sequence constraint includes

a generation number assigned in a corresponding manner to sequence of the jobs, and
a family number regarding which, corresponding to branching of the jobs, a number is newly assigned and, corresponding to merging of the branching, number being oldest in assignment sequence is carried over, and

the searching searches from among combinations of assignment of the jobs to the processes, a combination matching with sequence of the generation number and the family number in the sequence constraint.

**14.** The line balancing program according to any one of claims 11 to 13, wherein the searching searches for the line balancing in a range in which the cycle time is within the takt time, and
when there is no line balancing in a range in which the cycle time is within the takt time, the searching searches for the line balancing either by changing positioning of a robot positioned in a process of the assembly line or by switching from the robot to a person.

**15.** The line balancing program according to any one of claims 11 to 14, wherein
the calculating further calculates, in case in which the jobs are assigned to a robot positioned in the processes, degree of difficulty in execution of the jobs by the robot, and
the solving further solves optimization problem on condition of minimizing the calculated degree of difficulty and the searching searches for the line balancing.

# FIG.1

# FIG.2

# FIG.3

EP 3 282 407 A1

FIG.4

# FIG.5

```
                    ( START )
                        │
                        ▼
        ┌───────────────────────────────────┐
        │      RECEIVE INPUT OF DATA         │──S1
        └───────────────────────────────────┘
                        │
                        ▼
        ┌───────────────────────────────────┐
        │    GENERATE INITIAL ASSIGNMENT     │──S2
        └───────────────────────────────────┘
                        │
    ┌──────────────────►│
    │                   ▼
    │   ┌───────────────────────────────────┐
    │   │  GENERATE NEIGHBORHOOD SOLUTION    │──S3
    │   └───────────────────────────────────┘
    │                   │
    │                   ▼
    │   ┌───────────────────────────────────┐
    │   │      FROM NUMBER OF VIOLATIONS OF  │
    │   │  PRECEDENCE CONSTRAINT, CALCULATE  │──S4
    │   │      CORRESPONDING PENALTY VALUE   │
    │   └───────────────────────────────────┘
    │                   │
    │                   ▼
    │   ┌───────────────────────────────────┐
    │   │    FROM SUM TOTAL OF DEGREES OF    │
    │   │  DIFFICULTY OF JOBS ASSIGNED TO    │──S5
    │   │  ROBOT, CALCULATE CORRESPONDING    │
    │   │           PENALTY VALUE            │
    │   └───────────────────────────────────┘
    │                   │
    │                   ▼
    │   ┌───────────────────────────────────┐
    │   │  FROM RESIDUAL SUM OF SQUARES      │
    │   │  BETWEEN CYCLE TIMES OF WORKERS    │──S6
    │   │  AND TAKT TIME, CALCULATE          │
    │   │  CORRESPONDING PENALTY VALUE       │
    │   └───────────────────────────────────┘
    │                   │
    │                   ▼           S7
    │   NO        ◇─────────────◇
    │◄────────────   IS ASSIGNMENT
    │             TO BE UPDATED?
    │              ◇─────────────◇
    │                   │ YES
    │                   ▼
    │   ┌───────────────────────────────────┐
    │   │         PERFORM UPDATING           │──S8
    │   └───────────────────────────────────┘
    │                   │
    │                   ▼           S9
    │   NO        ◇─────────────◇
    └─────────────   IS TERMINATION
                  CONDITION MET?
                   ◇─────────────◇
                        │ YES
                        ▼
        ┌───────────────────────────────────┐
        │          OUTPUT RESULT             │──S10
        └───────────────────────────────────┘
                        │
                        ▼
                    (  END  )
```

# FIG.6

1

| 101 | 102 | 103 | 104 | 105 |
|-----|-----|-----|-----|-----|
| CPU | INPUT DEVICE | MONITOR | SPEAKER | MEDIUM READING DEVICE |

110

| 106 | 107 | 108 | 109 |
|-----|-----|-----|-----|
| INTERFACE DEVICE | COMMU- NICATION DEVICE | RAM | HARD DISK DEVICE |

111

PROGRAM

112

VARIETY OF DATA

Europäisches Patentamt

European Patent Office

Office européen des brevets

# EUROPEAN SEARCH REPORT

Application Number

EP 17 17 8893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S. G. PONNAMBALAM ET AL: "A Multi-Objective Genetic Algorithm for Solving Assembly Line Balancing Problem", INTERNATIONAL JOURNAL OF ADVANCED MANUFACTURING TECHNOLOGY., vol. 16, no. 5, 3 April 2000 (2000-04-03), pages 341-352, XP055393188, LONDON; GB ISSN: 0268-3768, DOI: 10.1007/s001700050166 * page 1 - page 2 * * page 9 * | 1-15 | INV. G06Q10/06 |
| X | US 5 177 688 A (RENTSCHLER DAVID [US] ET AL) 5 January 1993 (1993-01-05) * abstract * * column 1 - column 3 * * figure 7 * | 1-15 | |

TECHNICAL FIELDS SEARCHED (IPC)

G06Q

The present search report has been drawn up for all claims

| Place of search | Date of completion of the search | Examiner |
|---|---|---|
| Munich | 24 July 2017 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 8893

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2017

| Patent document cited in search report | | Publication date | Patent family member(s) | Publication date |
|---|---|---|---|---|
| US 5177688 | A | 05-01-1993 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6052178 A

**Non-patent literature cited in the description**

- **B. REKIEK et al.** A multiple objective grouping genetic algorithm for assembly line design. *J. Intell. Manuf.,* 2001, vol. 12, 467